# EUROPÄISCHE PATENTSCHRIFT

(11) **EP 0 303 857 B1**
(45) Veröffentlichungstag und Bekanntmachung des Hinweises auf die Patenterteilung: **12.05.1993**
(21) Anmeldenummer: 88112049.7
(22) Anmeldetag: 26.07.1988
(51) Int. Cl.: H04Q 1/14

(54) **Trägerelement**
Support element
Elément de support

(30) Priorität: 20.08.1987 DE 8711332 U
(43) Veröffentlichungstag der Anmeldung: 22.02.1989
(73) Patentinhaber: SIEMENS AKTIENGESELLSCHAFT, 80333 München (DE)
(72) Erfinder: Knoll, Rudolf, D-8137 Berg 3 (DE)

(56) Entgegenhaltungen:
- EP-A- 0 133 824
- DE-A- 3 508 693

## Beschreibung

Die Erfindung betrifft ein Trägerelement gemäß dem Oberbegriff des Anspruchs 1.

Ein solches Trägerelement ist aus der DE-A-3 508 693 bekannt.

Unter Verwendung solcher Verteilerleisten wird die für die Anlage festgelegte Rangierung zwischen dem System, den zu den einzelnen Endeinrichtungen führenden Systemleitungen und den Amtsleitungen vorgenommen. Es wird damit beispielsweise die Rufnummernlage vorgegeben. Durch sogenannte Trennstecker kann eine Auftrennung der über die Beschaltung dieser Leisten vorgegebenen Verbindung der genannten Komponenten erfolgen. Es ist üblich, als Trägerelement für solche Leisten Kunststoffteile zu verwenden, die auf die Befestigungsplatte aufgeschraubt werden. Es werden dabei die für ein solches Trägerelement notwendigen Funktionen nicht in ausreichender Weise erfüllt. Es ist die Aufgabe der Erfindung, die im Zusammenhang mit einem Trägerelement für die Verteilerleisten erforderlichen Funktionen in optimaler Weise zu gewährleisten und dabei gleichzeitig ein preisgünstiges und in einfachster Weise zu befestigendes Trägerelement zu schaffen.

Dies wird dadurch erreicht, daß es als Kunststoffteil ausgebildet ist, durch dessen Formgebung im Bereich der mit den Verteilerleisten zu bestückenden Vorderseite jeweils zwischen zwei benachbarten Trägerelementen bzw. Verteilerleisten ein für die Aufnahme von Drähten als Drahtkanal geeigneter Einschnitt gebildet ist, daß an der Unterseite mehrere Ansätze mit einem endseitig dazu senkrecht stehenden Anschlag vorgesehen sind, die in entsprechende Ausschnitte an der Befestigungsplatte zunächst einsetzbar und durch eine mit dem Anschlag an die Ausschnittskante beendete Verschiebebewegung in eine Position gebracht werden, in der diese Anschläge die Befestigungsplatte hintergreifen und daß in dieser Endposition je eine Aufnahmeöffnung in dem Kunststoffteil und in der Befestigungsplatte derart übereinander positioniert ist, daß zu ihrer festen Verbindung ein Verbindungselement einbringbar ist.

Durch die Formgebung des Kunststoffteils ist ohne Zusatzmaßnahmen der Kantenschutz für die zu führenden Drähte gewährleistet. Mit Hilfe der Ansätze und dem beispielsweise mitangespritzten Verbindungselement in Form eines einfach einzuschlagenden Riegelbolzens wird eine schraubenlose Befestigung auf der Basisplatte ermöglicht. Aufgrund des zusätzlich entstandenen Drahtkanals ist eine problemlose Verdrahtung der einzelnen Verteilerleisten untereinander möglich.

Gemäß einer Weiterbildung der Erfindung wird an dem Trägerelement eine Ausformung für die Aufnahme eines als Abstützelement für die zu führenden Drähte dienenden Rangierhakens vorgesehen. Dieser wird - bedingt durch die Lage der Ausformungen zueinander und der entsprechend daran angepaßten Formgestaltung - darin drehgesichert eingebracht. Es können dadurch in einfacher Weise zusätzliche Kanäle zur Drahtführung bzw. zusätzliche Befestigungsmöglichkeiten für die Drähte je nach Bedarf geschaffen werden. Diese flexible Anbringmöglichkeit solcher Rangierhaken erleichtert wesentlich die vorzunehmende Verdrahtung.

Die genannten Ansätze sind vorteilhafterweise als rechtwinklig zueinanderstehende rechteckförmige Flachhaken ausgebildet, die in einem Stück mit dem Kunststoffteil hergestellt werden. Die zum Einsetzen in die Befestigungsplatte notwendige Lochung wird in Abhängigkeit davon, ob das Trägerelement in vertikaler oder in horizontaler Richtung aufgebracht wird, unterschiedlich gestaltet. Es ist für diese Befestigung lediglich ein einfach gestanzter Ausschnitt erforderlich.

Weitere vorteilhafte Ausgestaltungen der Erfindung sind den restlichen Unteransprüchen zu entnehmen.

Die Erfindung wird nun anhand der Zeichnungen beschrieben. Es zeigt:
- Fig. 1: eine schematische Darstellung der im Inneren einer Gehäuseeinheit angeordneten Reihe von Trägerelementen einschließlich der auf sie aufgebrachten Leisten,
- Fig. 2: die Draufsicht auf ein Trägerelement,
- Fig. 3: den Längsschnitt durch ein Trägerelement mit schematischer Darstellung der daran angebrachten Leisten,
- Fig. 4: die Seitenansicht des Trägerelementes,
- Fig. 5: die Draufsicht auf ein in horizontaler Richtung anzubringendes Trägerelement,
- Fig. 6: die Vorderansicht des Trägerelementes nach Fig. 5,
- Fig. 7: einen Querschnitt durch das Trägerelement nach Fig. 5 und
- Fig. 8: einen Ausschnitt des Lochbildes der Befestigungsplatte.

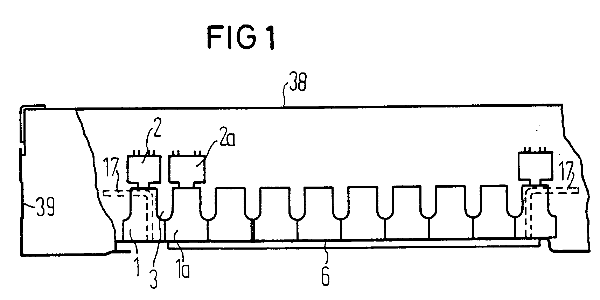

In der Fig. 1 sind von der Gehäuseeinheit, in der die Trägerelemente 1 untergebracht sind, lediglich eine Seitenwand 39, die Rückwand 6 und eine aufzubringende Abdeckhaube 38 angedeutet. In diesem Ausführungsbeispiel sollen die einzelnen Trägerelemente in vertikaler Richtung an einer Befestigungsplatte 6, die in diesem speziellen Fall zugleich die Rückwandplatte der Gehäuseeinheit ist, angebracht sein. Durch die entsprechende seitliche Ausformung der Trägerelemente entsteht bei ihrer Aneinanderreihung zwischen diesen einzelnen Trägerelementen ein Kanal 3, in dem zur Verdrahtung der einzelnen Leisten 2 untereinander die Drähte geführt werden können. Diese, auf einem Trägerelement aufzubringende Verteiler-Leisten können als Stützpunkt-Leisten oder als Trennleisten ausgebildet sein. Zur Bildung weiterer Drahtkanäle besteht die Möglichkeit, sogenannte Rangierhaken 17 in entsprechende Ausformungen der Trägerelemente 1 einzubringen.

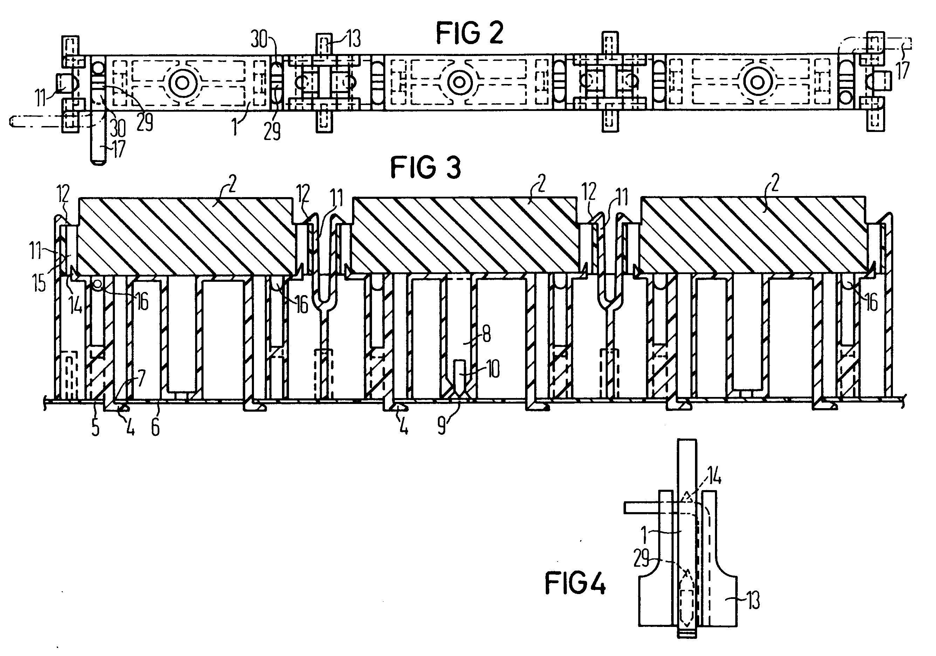

Das in den Fig. 2 bis 4 in unterschiedlichen Ansichten dargestellte Trägerelement 1 wird in vertikaler Richtung an der Befestigungsplatte 6 angebracht. Es kann eine Mehrzahl solcher nebeneinander und jeweils auch untereinander anzuordnenden Trägerelemente vorgesehen werden. Wie der in der Fig. 3 dargestellte Längsschnitt zeigt, wird das als Kunststoffteil ausgebildete Trägerelement zur Vermeidung von Schwindungen und zur Erhöhung der Stabilität möglichst dünnwandig gestaltet. Dabei wurde die Formgebung so gewählt, daß das gesamte Trägerelement in einer Richtung ausformbar ist. Dies ist von Vorteil, da man für die Herstellung dieses Trägerelementes kein Werkzeug mit einem sogenannten Schieber benötigt.

An der Unterseite weist das Trägerelement 1 mehrere mittig angeordnete Ansätze 4 auf, die mit einem endseitig dazu senkrecht stehenden Anschlag versehen sind. Diese Ansätze werden durch eine entsprechend angeordnete Rechtecklochung in der Platte 6 eingebracht. Nach einer Verschiebebewegung zur Unterkante 7 der jeweiligen Lochung 5 hintergreifen die genannten Anschläge die Platte, so daß damit eine schraubenlose Befestigung der einzelnen Trägerelemente ermöglicht wird. Zur Festlegung dieser Endposition wird der mit einer Sollbruchstelle angespritzte Riegelbolzen 10 in die mit ihm in der Endstellung fluchtende Lochung 9 der Platte eingeschlagen. Damit ist dann die Position des einzelnen Trägerelementes gegen Verschiebebewegungen gesichert. Das Einschlagen des Riegelbolzens 10 kann mit Hilfe eines in den entsprechenden Hohlraum 8 eingebrachten Dorns vorgenommen werden.

Durch die an der Unterseite beginnenden stummelartigen Ansätze 13, die zur Oberseite hin gerundet an der Seitenkante ansetzen, wird bei der Aneinanderreihung der einzelnen Trägerelemente gemäß Fig. 1 der Drahtkanal 3 gebildet. Da das Trägerelement ein Kunststoffspritzgußteil ist, sind keine zusätzlichen Maßnahmen für den Kantenschutz bei der Führung der Drähte zu treffen. Dieser Kantenschutz ist bereits durch das Kunststoffteil gegeben, insbesondere dann, wenn die seitlichen Kanten eines jeden stummelartigen Ansatzes 13 gleichfalls abgerundet sind.

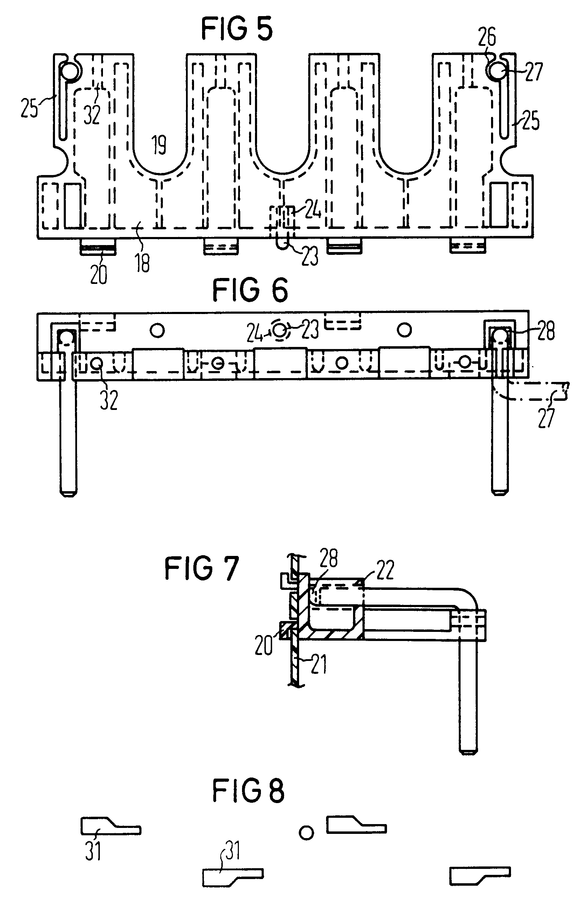

Um eine Befestigungsmöglichkeit für die zu rangierenden Drähte der beispielsweise zur Anlagenseite führenden Kabel zu schaffen bzw. um einen weiteren Kanal für diese Drähte zu bilden, können an den einzelnen Trägerelementen Rangierhaken angebracht werden. Diese zumindest einseitig abgewinkelten Rangierhaken 17 können in eine Ausformung 16 am Trägerelement eingelegt werden. Mit ihrem abgewinkelten Teil werden sie, wie aus der Seitenansicht der Fig. 4 hervorgeht in eine in Querrichtung verlaufende Ausformung des Trägerelementes eingeführt. Um diese Einführung zu erleichtern, ist in Form der Spitze 29 hierzu eine Einlaufschräge vorgegeben. Die den Rangierhaken aufnehmende Öffnung 30 ist beidseitig vorhanden, so daß je nach Bedarf der Rangierhaken in der gewünschten Richtung eingesetzt werden kann. Dieser Rangierhaken kann bei einer entsprechenden Formgebung nicht nur senkrecht zum Trägerelement stehen, sondern - wie dies in der Fig.2 strichliert angedeutet ist - auch in Längsrichtung verlaufen. Es können an jedem Trägerelement 1 mehrere solcher Rangierhaken angebracht werden, so daß dadurch in einfachster Weise ein Drahtkanal zu bilden ist. Durch das Einbringen in die Ausformung 30 ist der Rangierhaken gegen eine Drehung gesichert und er wird in der Ausformung 16 durch die Leiste 2 gehalten. Im Ausführungsbeispiel sind für jedes Trägerelement 3 derartige Leisten vorgesehen. Die Leisten eines Trägerelementes können beispielsweise einem Kabel zugeordnet sein. Es muß also grundsätzlich nur die unbedingt notwendige Anzahl von Trägerelementen vorgeleistet werden. Es kann dann bei Bedarf eine Erweiterung durch zusätzliche Trägerelemente erfolgen.

Jedes Trägerelement ist so gestaltet, daß die einzelnen Verteilerleisten schraubenlos über eine Schnappverbindung am Trägerelement befestigt werden können. Hierzu sind in Längsrichtung im Abstand der Längenabmessung einer Verteilerleiste federnde Zungen 11 vorhanden, die beim Aufsetzen einer Federleiste ausgelenkt werden. Nach dem Aufsetzen liegen sie unter Federspannung an der Seitenfläche einer jeden Verteilerleiste an und umgreifen mit ihrem Ansatz 12 ihre obere Seitenkante. Vermittels dieser an der Seitenkante aufgeschnappten Rasthaken wird somit jede Verteilerleiste am Trägerelement gehalten. Zur Lagesicherung einer jeden Verteilerleiste erfolgt durch den in eine entsprechende Ausformung 15 der Verteilerleiste eingreifenden halbkegelförmigen Ansatzes 14 eine Zentrierung.

In den Fig. 5 bis 7 sind unterschiedliche Ansichten eines anderen Ausführungsbeispiels für ein Trägerelement dargestellt. Dieses Trägerelement 18 wird in horizontaler Richtung an der Befestigungsplatte angebracht. Diese Befestigung erfolgt wiederum dadurch, daß Ansätze 20, die endseitig einen abgewinkelten Anschlag aufweisen, in eine daran angepaßte Lochung an der Befestigungsplatte eingebracht werden. Durch eine Verschiebebewegung bis zur seitlichen Kante dieser Lochung wird die Endposition erreicht. In dieser Endposition kann eine Fixierung des Trägerelementes 18 durch den Riegelbolzen 23 erfolgen, der in eine in dieser Endposition damit fluchtende Lochung an der Befestigungsplatte einzuschlagen ist. Dieser Riegelbolzen ist in der Ausformung 24 des Trägerelementes angespritzt. Um eine ausreichende Kippsteifigkeit zu erhalten, sind die Ansätze 20 gegeneinander versetzt im Randbereich der Unterseite des Trägerelementes angebracht. Die für die Befestigung eines jeden Trägerelementes notwendige Lochung in der Befestigungsplatte ist in Fig. 8 dargestellt. In den breiteren Teil der schwalbenschwanzförmigen Lochung werden die Ansätze 20 zunächst eingebracht und anschließend in den schmalen Bereich eingeschoben. Für jede Leistenreihe, die im Ausführungsbeispiel aus vier am Trägerelemente zu befestigende Leisten besteht, sind zwei derartige Trägerelemente erforderlich. Diese werden dann im stirnseitigen Endbereich beispielsweise durch selbstschneidende Schrauben befestigt, die in die Lochung 32 eingedreht werden. Man kann also für Leisten unterschiedlicher Abmessungen die gleichen Trägerelemente verwenden. Es sind lediglich innerhalb einer Leistenreihe mit jeweils gleichen Leisten die beiden erforderlichen Trägerelemente in einem Abstand anzubringen, der auf die jeweilige Leistengröße abgestimmt ist. Zur Aufnahme eines Rangierhakens ist an jeder Seite eines Trägerelementes eine Federzunge 25 vorgesehen. Unter Auslenkung dieser Federzunge kann ein Rangierhaken 27 in eine entsprechende Ausformung 26 eingebracht werden. Das obere Ende der Rastfeder umgreift durch eine entsprechende Ausbildung den eingedrückten Rangierhaken 27, so daß er gegen ein Herausfallen gesichert ist. Seine Drehsicherung erfolgt dadurch, daß er mit dem abgewinkelten Teil in eine entsprechende Lochung 28 des Trägerelementes 18 eingeführt wird. Um dies zu erleichtern, ist eine Einlaufschräge 22 vorgesehen. Wie der Fig. 7 zu entnehmen ist, weist das Trägerelement eine Stufung auf. Dadurch ergibt sich eine Anlagefläche für den eingebrachten Rangierhaken. Zwischen den Auflageflächen für die einzelnen Leisten ist jeweils ein Einschnitt 19 vorgesehen. In diesen Einschnitt können beispielsweise die Drähte für die Verdrahtung der einzelnen Leisten untereinander geführt werden. Da das Trägerelement 18 ein Kunststoffteil ist und die Kanten des Einschnittes geschrägt oder gerundet ausgebildet sein können, sind keine zusätzlichen Maßnahmen für den Kantenschutz der eingelegten Drähte erforderlich. Wie der Ansicht der Vorderseite gemäß der Fig.6 entnehmbar ist, kann je nach Bedarf ein Rangierhaken gewählt werden, der senkrecht zum Trägerelement oder in Längsrichtung des Trägerelementes ausgerichtet ist.

Für spezielle Leisten kann ein Erdblech erforderlich sein. Dieses Erdblech kann so geformt sein, daß es beginnend mit der oberen Kante das Trägerelement einschließlich der Stufung umgreift. Um eine Beschädigung der Isolierung der in den Einschnitt 19 einzulegenden Drähte zu vermeiden, wird das Erdblech nicht bis zum äußeren Rand dieses Einschnittes geführt.

## Patentansprüche

1. Trägerelement (1, 18) für mehrere daran zu befestigende Verteilerleisten (2) eines Hauptverteilers eines Fernmelde-, insbesondere Kommunikationssystems, das als Kunststoffteil ausgebildet ist und zusammen mit weiteren gleichartigen Trägerelementen in seinem Gebrauchszustand an einer mechanisch starren Befestigungsplatte (6), vorzugsweise der Rückwandplatte einer den Hauptverteiler aufnehmenden Gehäuseeinheit, neben- und/oder übereinander angeordnet befestigt ist, wobei die Anschlüsse der einzelnen Verteilerleisten gemäß dem für das System vorgegebenen Rangierplan miteinander und/oder mit den Adern der zum Hauptverteiler amts- und systemseitig führenden Verbindungskabeln verbindbar sind,
**dadurch gekennzeichnet,**
daß durch die Formgebung des Trägerelementes im Bereich der mit den Verteilerleisten (2) zu bestückenden Vorderseite jeweils zwischen zwei benachbarten Trägerelementen (1, 1a) bzw. Verteilerleisten (2, 2a) ein für die Aufnahme von Drähten als Drahtkanal geeigneter Einschnitt (3, 19) gebildet ist, daß an der Unterseite mehrere Ansätze (4, 20) mit einem endseitig dazu senkrecht stehenden Anschlag vorgesehen sind, die in entsprechende Ausschnitte (5, 31) an der Befestigungsplatte (6) zunächst einsetzbar und durch eine mit dem Anschlag an die Ausschnittskante beendete Verschiebebewegung in eine Position gebracht werden, in der diese Anschläge die Befestigungsplatte (6) hintergreifen, und daß in dieser Endposition je eine Aufnahmeöffnung (8, 9) in dem Kunststoffteil (1) und in der Befestigungsplatte (6, 21) derart übereinander positioniert ist, daß zu ihrer festen Verbindung ein Verbindungselement (10, 23) durch axial gerichtete Kräfte daran einbringbar ist.

2. Trägerelement nach Anspruch 1,
**dadurch gekennzeichnet,**
daß an ihm Ausformungen (16, 30 bzw. 26, 28) für die Aufnahme eines als Abstützelement für die zu führenden Drähte dienender Rangierhaken (17, 27) vorgesehen sind, daß dieser Rangierhaken durch die Lage der Ausformungen zueinander bei seiner entsprechend angepaßten Formgestaltung darin drehgesichert eingebracht wird.

3. Trägerelement nach Anspruch 1,
**dadurch gekennzeichnet,**
daß die Ansätze (4, 20) als rechtwinklig zueinander stehende rechteckförmige einstückig mit dem Kunststoffteil hergestellte Flachhaken ausgebildet sind.

4. Trägerelement nach Anspruch 1,
**dadurch gekennzeichnet,**
daß das Verbindungselement (10, 23) ein an dem Kunststoffteil (1, 18) angespritzter Riegelbolzen ist, der zur festen Verbindung dieser Platte mit der Befestigungsplatte (6, 21) durch die dafür vorhandene Lochung in die damit in der genannten Endposition lagemäßig übereinstimmenden Lochung (9) der Befestigungsplatte einzuschlagen ist.

5. Trägerelement nach einem der Ansprüche 1 bis 4,
**dadurch gekennzeichnet,**
daß in Längsrichtung im Abstand der Längenabmessung einer Verteilerleiste (2) für jede der insgesamt an ihr anzubringenden Verteilerleisten eine federnde Zunge (11) mit an ihrem freien Ende angebrachten und zur Einbringstelle zeigenden Vorsprung (12) vorgesehen ist, die nach dem Auslenken beim Aufsetzen der Verteilerleiste (2) unter Federspannung an jeder Verteilerleiste (2) seitlich anliegt und zur Herstellung einer Rastverbindung der genannte Vorsprung (12) die obere Seitenkante formschlüssig umgreift.

6. Trägerelement nach einem der Ansprüche 1 bis 5,
**dadurch gekennzeichnet,**
daß in seiner Längsrichtung beidseitig ein mehrfach vorgesehener und in einem bestimmten Abstand von der Vorderseitenkante beginnender, vorzugsweise an seiner Oberseite gerundeter stummelartiger Ansatz (13) vorhanden ist, so daß dadurch jeweils zwischen zwei seitlich benachbarten Trägerelementen (1, 1a) der als Drahtkanal geeignete Einschnitt (3) gebildet wird.

7. Trägerelement nach einem der Ansprüche 1 bis 6,
**dadurch gekennzeichnet,**
daß an der Oberseite des Trägerelementes im Bereich zwischen den für jede Verteilerleiste vorhandenen federnden Zungen ein aus der Oberfläche herausragender, vorzugsweise halbkegelförmiger Zentrieransatz (14) vorhanden ist, der in eine entsprechend vorgesehene Öffnung (15) der aufgesetzten Verteilerleiste (2) eingreift.

8. Trägerelement nach einem der Ansprüche 1 bis 7,
**dadurch gekennzeichnet,**
daß vorzugsweise unterhalb des Endbereiches der Verteilerleiste parallel zur Oberseite und in Richtung der Seitenfläche Ausformungen (18, 30) für die Aufnahme eines als Abstützelement für die zu führenden Drähte dienender Rangierhaken (17) vorgesehen sind, in die dieser drehgesichert eingelegt wird.

9. Trägerelement nach Anspruch 1,
**dadurch gekennzeichnet,**
daß es als ein in horizontaler Richtung an der Befestigungsplatte (21) anzubringendes Kunststoffteil (18) ausgebildet ist, daß jede Verteilerleiste (2) jeweils in ihrem Endbereich an einem Trägerelement befestigt ist, daß durch die Einschnitte (19) die verbleibenden Vorderflächenanteile als für diese Befestigung notwendige Auflageflächen dienen.

10. Trägerelement nach Anspruch 9,
**dadurch gekennzeichnet,**
daß es über seine gesamte Länge eine einseitig ausgerichtete Stufe aufweist, deren Grundfläche mit der Rückseite zusammenfällt.

11. Trägerelement nach Anspruch 10,
**dadurch gekennzeichnet,**
daß in der Stufenfläche mindestens eine den angespritzten Riegelbolzen (23) aufnehmende Lochung (24) vorhanden ist.

12. Trägerelement nach Anspruch 10,
**dadurch gekennzeichnet,**
daß mindestens eine der seitlichen Begrenzungsflächen als federnde Zunge (25) ausgebildet ist, daß dem oberen Ende der Innenseite der federnden Zunge (25) gegenüberliegend eine Ausformung (26) zur Aufnahme eines von der Vorderseite her unter Auslenkung der federnden Zunge (25) einführbaren Rangierhakens (27) vorgesehen ist und daß die genannte Stufe (22) eine Öffnung (28) zur Aufnahme des abgewinkelten Endes des Rangierhakens (27) aufweist.

13. Trägerelement nach Anspruch 9,
**dadurch gekennzeichnet,**
daß unmittelbar benachbarte Ansätze (20) der Unterseite jeweils alternierend gegeneinander versetzt angeordnet sind.

14. Trägerelement nach Anspruch 12,
**dadurch gekennzeichnet,**
daß bei ihrer Nebeneinanderreihung durch die an den sich gegenüberliegenden stirnseitigen Begrenzungsflächen zweier Trägerelemente (18) angebrachten Rangierhaken (27) ein Kanal für die Führung von Verbindungsdrähten gebildet wird (Fig. 5, Fig. 6).

15. Trägerelement nach einem der Ansprüche 9 bis 14,
**dadurch gekennzeichnet,**
daß zwischen den jeweils für die Aufnahme des Rangierhakens (27) vorgesehenen Öffnungen (28) im Endbereich der Stufe (22) ein an diese Stufenflächen und den dazu senkrecht stehenden Flächenteilen durch eine entsprechende Formgebung angepaßtes Erdblech angelegt wird, daß die zu den Ausschnitten (19) in der Kunststoffplatte (18) weisenden Kanten dieses Erdbleches gegenüber den Kanten der Kunststoffplatte zurückgesetzt sind.

## Claims

1. Support element (1, 18) for a plurality of distributor strips (2), to be attached thereto, of a main distribution frame of a telecommunications system, particularly a communications system, which element is constructed as a plastic part and, together with further similar support elements is mounted in its state of use on a mechanically rigid mounting panel (6), preferably the rear wall panel of a housing unit accommodating the main distribution frame, arranged adjacently to one another and/or above one another, the connections of the individual distributor strips being connectable to one another and/or to the wires of the connecting cables leading to the main distribution frame at the exchange and system side in accordance with the distribution plan predetermined for the system, characterised in that due to the shaping of the support element in the area of the front to be equipped with the distributor strips (2), a recess (3, 19) suitable for accommodating wires as a wire duct is formed in each case between two adjacent support elements (1, 1a) or distributor strips (2, 2a), that on the underside, a plurality of projections (4, 20) with a stop perpendicular thereto at the end are provided which initially can be inserted into corresponding cutouts (5, 31) in the mounting panel (6) and are brought by a displacement movement ended by the stop against the cutout edge into a position in which these stops engage behind the mounting panel (6), and that in this end position, one receiving opening (8, 9) each in the plastic part (1) and in the mounting panel (6, 21) are positioned above one another in such a manner that a connecting element (10, 23) can be inserted thereon by axially directed forces so that they are firmly connected.

2. Support element according to Claim 1, characterised in that mouldings (16, 30 and 26, 28) are provided on it for accommodating a distributing hook (17, 27) used as a support element for the wires to be guided, that this distributing hook, due to the position of the mouldings with respect to one another, with its appropriately adapted shaping, is inserted therein rotationally secured.

3. Carrier element according to Claim 1, characterised in that the projections (4, 20) are constructed as rectangular flat hooks produced integrally with the plastic part and at right angles to one another.

4. Carrier element according to Claim 1, characterised in that the connecting element (10, 23) is a latch bolt injection moulded on the plastic part (1, 18), which, to connect this panel firmly to the mounting panel (6, 21), must be hammered through the hole existing for this purpose into the hole (9) in the mounting panel, the position of which corresponds to the former hole in the said end position.

5. Carrier element according to one of Claims 1 to 4, characterised in that an elastic tongue (11) with a projection (12) attached to its free end and pointing towards the point of insertion is provided, at the distance of the length dimension of one distributor strip (2) in the longitudinal direction, for each of the distributor strips to be attached to it overall, which elastic tongue rests laterally against each distributor strip (2) under spring tension and after the deflection during the placement of the distributor strip (2) and the said projection (12) encircles the upper side edge with positive fit (in order) to produce a latched connection.

6. Carrier element according to one of Claims 1 to 5, characterised in that a stump-like projection (13) which is preferably rounded on its topside, begins at a certain distance from the front edge and is provided a number of times is present on both sides in its longitudinal direction so that, as a result, the recess (3) suitable as wire duct is in each case formed between two laterally adjacent carrier elements (1, 1a).

7. Carrier element according to one of Claims 1 to 6, characterised in that at the top of the carrier element in the area between the elastic tongues existing for each distributor strip, a preferably semiconical centring projection (14) protruding from the surface exists which engages in a correspondingly provided opening (15) in the distributor strip (2) placed on top.

8. Carrier element according to one of Claims 1 to 7, characterised in that mouldings (18, 30) for accommodating a distributing hook (17) used as a support element for the wires to be guided are provided preferably below the end area of the distributor strip parallel to the top and in the direction of the side face, into which mouldings the said hook is inserted rotationally secured.

9. Carrier element according to Claim 1, characterised in that it is constructed as a plastic part (18) to be attached to the mounting panel (21) in the horizontal direction, that each distributor strip (2) is mounted in each case in its end area on a carrier element, that the remaining front face proportions are used as support areas necessary for this mounting through the recesses (19).

10. Carrier element according to Claim 9, characterised in that it exhibits over its entire length a unilaterally aligned step, the base area of which coincides with the rear.

11. Carrier element according to Claim 10, characterised in that at least one hole (24) accommodating the injection-moulded latch bolt (23) exists in the step area.

12. Carrier element according to Claim 10, characterised in that at least one of the lateral boundary areas is constructed as an elastic tongue (25), that a moulding (26) for accommodating a distributing hook (27), which can be inserted from the front with deflection of the elastic tongue (25), is provided opposite to the top end of the inside of the elastic tongue (25) and that the said step (22) exhibits an opening (28) for accommodating the angled-away end of the distributing hook (27).

13. Carrier element according to Claim 9, characterised in that immediately adjacent projections (20) of the underside are in each case arranged alternatingly offset with respect to one another.

14. Carrier element according to Claim 12, characterised in that when they are placed next to one another, a duct for guiding connecting wires is formed by the distributing hooks (27) attached to the mutually opposite end-face boundary areas of two carrier elements (18) (Figure 5, Figure 6).

15. Carrier element according to one of Claims 9 to 14, characterised in that between the openings (28), in each case provided for accommodating the distributing hook (27), in the end area of the step (22), an earthing plate adapted to these step areas and the surface parts perpendicular thereto by appropriate shaping is attached, that the edges of this earthing plate pointing towards the recesses (19) in the plastic panel (18) are set back with respect to the edges of the plastic panel.

## Revendications

1. Élément de support (1,18) pour plusieurs barrettes de distribution (2), devant être fixées à cet élément de support, d'un répartiteur principal d'un système de télécommunication, notamment de transmission d'informations, qui est réalisé sous la forme d'une pièce en matière plastique et est fixé, ainsi que d'autres éléments de support identiques, dans son état d'utilisation, sur une plaque de fixation(6) mécaniquement rigide, de préférence la plaque arrière d'une unité de boîtier logeant le répartiteur principal, et ce côte-à-côte et/ou en superposition, les bornes des différentes barrettes de répartition pouvant être raccordées, conformément au plan de rangement prédéterminé par le système, entre elles et/ou aux conducteurs des câbles de jonction aboutissant côté central et côté système au répartiteur principal,
caractérisé par le fait
qu'une encoche (3,19) convenant en tant que canal pour loger des fils est formée par la configuration de l'élément de support dans la zone de la face avant, qui doit être équipée des barrettes de distribution (2), respectivement entre deux éléments de support (1,1a) voisin et deux barrettes voisines de distribution (2,2a), que sur la face inférieure, il est prévu plusieurs appendices saillants (4,20) qui comportent une butée perpendiculaire, à leur extrémité, à ces appendices saillants et qui peuvent être insérés tout d'abord dans des découpes correspondantes (5,31) ménagées dans la plaque de fixation (6) et peuvent être amenés, au moyen d'un mouvement de translation interrompu par la butée au niveau du bord de la découpe, dans une position dans laquelle ces butées pénètrent dans la plaque de fixation (6), et que dans cette position finale, des ouvertures de logement (8,9), ménagées respectivement dans la pièce en matière plastique (1) et dans la plaque de fixation (6,21) sont positionnées en superposition de telle sorte que, pour leur réunion selon une liaison fixe, un élément de liaison (10,23) peut être inséré, dans la plaque, sous l'action de forces dirigées axialement.

2. Élément de support suivant la revendication 1, caractérisé par le fait que dans cet élément sont prévus des évidements (16,30 ou 26,28) destinés à loger un crochet de montage (17,27), qui sert d'élément d'appui pour les fils devant être guidés, et que ce crochet de montage est inséré, en étant bloqué en rotation, dans les évidements en raison de la position relative de ces derniers et de la configuration du crochet adaptée à celle des évidements.

3. Élément de support suivant la revendication 1, caractérisé par le fait que les appendices saillants (4,20) sont réalisés sous la forme de crochets plats rectangulaires, qui sont perpendiculaires entre eux et sont réalisés d'un seul tenant avec la pièce en matière plastique.

4. Élément de support suivant la revendication 1, caractérisé par le fait que l'élément de liaison (10,23) est un boulon d'assemblage qui est moulé par injection sur la pièce en matière plastique (1,18) et qui, pour l'établissement d'une liaison fixe entre cette plaque et la plaque de fixation (6,21), doit être enfoncé, à travers le trou prévu à cet effet, dans le trou (9) de la plaque de fixation, dont la position coïncide avec le trou précédent, dans ladite position d'extrémité.

5. Élément de support suivant l'une des revendications 1 à 4, caractérisé par le fait que dans la direction longitudinale et à distance de la limite en longueur d'une barrette de distribution (2), il est prévu, pour chacune des barrettes de distribution qui doit être installée sur l'élément de support, une languette élastique (11) pourvue d'une partie saillante (12), qui est montée sur l'extrémité libre de la barrette, est dirigée vers le point d'insertion, s'applique latéralement, après avoir été déviée lors de la mise en place de la barrette de distribution (2) sous l'action d'une contrainte élastique contre chaque barrette distribution (2) et s'engage, selon une liaison par formes complémentaires, autour du bord latéral supérieur, de manière à établir une liaison à encliquetage avec ladite partie saillante (12).

6. Élément de support suivant l'une des revendications 1 à 5, caractérisé par le fait que dans la direction longitudinale de l'élément de support et des deux côtés de ce dernier est disposé un appendice saillant (13) en forme d'embout qui commence à une certaine distance à partir du bord latéral avant et qui est arrondi de préférence au niveau de sa face supérieure, ce qui contribue à former ainsi l'encoche (3) convenant, en tant que canal pour fils, respectivement entre deux éléments de support latéralement voisins (1,1a).

7. Élément de support suivant l'une des revendications 1, caractérisé par le fait que sur la face supérieure d'un élément de support est présent, dans la zone située entre les languettes élastiques présentes pour chaque barrette de distribution, un élément saillant de centrage (14) qui fait saillie à partir de la surface, qui est de préférence réalisé avec une forme hémisphérique et qui s'engage dans une ouverture (15) prévue de façon correspondante dans la barrette de distribution (2) mise en place.

8. Élément de support suivant l'une des revendications 1 à 7, caractérisé par le fait que de préférence au-dessous de la zone terminale de la barrette de distribution et parallèlement à la face supérieure et en direction de la surface latérale, il est prévu des évidements (18,30) servant à loger un crochet de montage (17), qui est utilisé en tant qu'élément de support pour les fils devant être guidés, et dans lesquels ce crochet est introduit d'une manière bloquée en rotation.

9. Élément de support suivant la revendication 1, caractérisé par le fait qu'il est réalisé sous la forme d'une pièce en matière plastique (18), qui doit être montée, dans une direction horizontale, sur la plaque de fixation (21), que chaque barrette de distribution (2) est fixée respectivement au niveau de sa partie d'extrémité, sur un élément de support et qu'en raison de la présence des encoches (19), les parties restantes de la surface avant sont utilisées en tant que surfaces d'appui nécessaires pour cette fixation.

10. Élément de support suivant la revendication 9, caractérisé par le fait qu'il possède, sur toute sa longueur, un épaulement dirigé d'un côté et dont la surface de base coïncide avec la face arrière.

11. Élément de support suivant la revendication 10, caractérisé par le fait que dans la surface de l'épaulement il est prévu au moins un trou (24) qui loge le boulon de verrouillage (23) moulé par injection.

12. Élément de support suivant la revendication 10, caractérisé par le fait qu'au moins l'une des surfaces latérales limites est agencée en tant que languette élastique (25), qu'en vis-à-vis de l'extrémité supérieure de la face intérieure de la languette élastique (25), il est prévu un évidement (26) destiné à loger un crochet de montage (27) qui peut être introduit à partir de la face avant, moyennant une déviation de la languette élastique (25), et que ledit épaulement (22) possède une ouverture (28) destinée à loger l'extrémité coudée du crochet de montage (27).

13. Élément de support suivant la revendication 9, caractérisé par le fait que les appendices saillants directement voisins (20) de la face inférieure sont disposés en étant alternativement décalés les uns par rapport aux autres.

14. Élément de support suivant la revendication 12, caractérisé par le fait que, dans le cas de la disposition côte-à-côte de tels éléments de support, un canal pour le guidage de fils de jonction est formé par les crochets de montage (27) disposés sur des surfaces frontales limites, qui se font face, de deux éléments de support (18). (Figures 5, 6).

15. Élément de support suivant l'une des revendications 9 à 14, caractérisé par le fait qu'entre les ouvertures (28) qui sont destinées respectivement à loger le crochet de montage (27), dans la zone d'extrémité de l'épaulement (22), est disposée une tôle de mise à la terre, qui est adaptée à ces surfaces de l'épaulement et aux éléments de surface, qui sont perpendiculaires à ces surfaces, grâce à une configuration correspondante, que les bords de cette tôle de mise à la terre, qui sont dirigés vers les découpes (19) ménagées dans la plaque en matière plastique (18), sont disposées en retrait par rapport aux bords de la plaque en matière plastique.
